**Europäisches Patentamt**

**European Patent Office**

**Office européen des brevets**

(19)

(11) Veröffentlichungsnummer: **0 031 062**
**B1**

(12) **EUROPÄISCHE PATENTSCHRIFT**

(45) Veröffentlichungstag der Patentschrift:
**09.02.83**

(51) Int. Cl.³: **C 01 G 23/00, C 22 B 34/12**

(21) Anmeldenummer: **80107696.9**

(22) Anmeldetag: **06.12.80**

(54) **Aufschluss ternärer Rohstoffmischungen.**

(30) Priorität: **21.12.79 DE 2951746**

(43) Veröffentlichungstag der Anmeldung:
**01.07.81 Patentblatt 81/26**

(45) Bekanntmachung des Hinweises auf die Patenterteilung:
**09.02.83 Patentblatt 83/6**

(84) Benannte Vertragsstaaten:
**DE FR GB IT**

(56) Entgegenhaltungen:
**DE-C-490 600**
**US-A-2 631 924**
**US-A-2 953 434**

(73) Patentinhaber: **BAYER AG, Zentralbereich Patente,
Marken und Lizenzen, D-5090 Leverkusen 1, Bayerwerk
(DE)**

(72) Erfinder: **Rieck, Hilmar, Dr., Doerperhofstrasse 15,
D-4150 Krefeld (DE)**
Erfinder: **Gutsche, Walter, Dr.,
Johannes-Heynen-Strasse 16, D-4150 Krefeld 1 (DE)**
Erfinder: **Woditsch, Peter, Dr., Deswatinesstrasse 83,
D-4150 Krefeld 1 (DE)**
Erfinder: **Panek, Peter, Dr., Bodelschwinghstrasse 12,
D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Aufschluß ternärer Rohstoffmischungen

Die Erfindung betrifft ein Verfahren zur Herstellung einer zur Verarbeitung zu Titandioxidpigmenten geeigneten hydrolisierbaren Titanylsulfatlösung durch gemeinsamen Aufschluß ternärer Rohstoffmischungen von $TiO_2$- und Ti(III)-reicher Schlacke, $TiO_2$- und Ti(III)-ärmerer Schlacke und Ilmenit mit Schwefelsäure eines $H_2SO_4$-Gehaltes größer als 86% und Lösen der verfestigten Reaktionsmasse in einem wäßrigen Lösungsmittel, wobei vorzugsweise die Schwefelsäure in den Komponenten Oleum und vorkonzentrierter, rückgeführter Dünnsäure zugesetzt wird.

Der Aufschluß ternärer Rohstoffmischungen bietet eine Vielzahl technischer Vorteile. Die Herstellung von Titandioxidpigmenten nach dem Sulfatverfahren zwingt aus Wirtschaftlichkeits- und Verfügbarkeitsgründen zu flexiblem Rohstoffeinsatz. Prinzipiell können Schlacken und Ilmenite verschiedener Herkunft und Zusammensetzung verarbeitet werden. Insbesondere aus wirtschaftlichen Überlegungen ist dabei dem gemeinsamen Mischaufschluß der Vorzug gegenüber dem getrennten Aufschluß der einzelnen Rohstoffkomponenten zu geben.

Der gemeinsame Aufschluß ternärer titanhaltiger Rohstoffmischungen ist noch nicht beschrieben worden. Dagegen sind Aufschlüsse binärer Rohstoffmischungen aus der GB-A-741 757 und der US-A-2 631 924 bekannt. Nach beiden Verfahren führt insbesondere der gemeinsame Aufschluß mit steigenden Gewichtsteilen Ilmenit zu stark schwankenden Ausbeuten an löslichem Titansulfat. Es ist danach verständlich, wenn sich die DE-A-1 052 378 in ihrem Verfahren zur Herstellung hydrolysierbarer Titanylsulfatlösungen durch Umsetzen feinteiliger Gemische aus Ilmenit und geschmolzener titanhaltiger Schlacke mit konzentrierter Schwefelsäure und Lösen der verfestigten Reaktionsmasse in einem wäßrigen Lösungsmittel auf die Umsetzung solcher Ilmenit-Schlacke-Gemische richtet, die nur 10 bis 20% Ilmenit enthalten.

Überraschenderweise wurde nun gefunden, daß auch der gemeinsame Aufschluß ternärer titanhaltiger Rohstoffmischungen mit konzentrierter Schwefelsäure zur wirtschaftlichen Herstellung einer einheitlichen, zur Weiterverarbeitung auf Titandioxidpigmente geeigneten Titanylsulfatlösung, großtechnisch realisierbar ist. So können bei guter Aufschlußausbeute und guter betrieblicher Handhabbarkeit hinsichtlich des Temperaturverlaufs bei der Reaktion und des Erstarrungsverhaltens der Reaktionsmasse erfindungsgemäß Gemische einer Schlacke, die einen Ti-Gehalt >80% (berechnet als $TiO_2$ und bezogen auf Schlacke) und einen Ti(III)-Gehalt von 22—40%, vorzugsweise von 25—35% (berechnet als $TiO_2$ und bezogen auf Schlacke), einer Schlacke, die einen Ti-Gehalt von 60—80% (berechnet als $TiO_2$ und bezogen auf Schlacke) und einen Ti(III)-Gehalt von 5—15% (berechnet als $TiO_2$ und bezogen auf Schlacke), und ein Ilmenit, der ein Fe(III)- zu Fe(II)-Verhältnis von 1:1 bis 10:1 aufweist, in einem solchen Verhältnis gemeinsam mit Schwefelsäure als ternäre Rohstoffmischung zur Umsetzung gebracht werden, daß in der Mischung das Molverhältnis von Ti(III) zu Fe(III) $\geq$ 1,4, vorzugsweise das Gewichtsverhältnis $FeSO_4$ zu $TiO_2$ $\leq$ 0,5, besonders bevorzugt < 0,4 beträgt.

Auch der Aufschluß titanhaltiger Rohstoffe mit Gemischen aus Oleum und rückgeführter vorkonzentrierter Schwefelsäure ist schon mehrfach beschrieben worden.

Die bekannten Verfahren nutzen in der Regel die bei der Zusammenführung einer verdünnten und einer konzentrierten Schwefelsäure auftretende Verdünnungswärme zum Starten der Aufschlußreaktion eines titanhaltigen Rohstoffes mit diesem Säuregemisch. Die Konzentration der dabei verwendeten rückgeführten vorkonzentrierten Dünnsäuren wird somit relativ niedrig gewählt, damit die beim Mischen mit der konzentrierten Säure auftretende Verdünnungswärme groß genug ist, um ohne weitere Energiezufuhr die Aufschlußreaktion des Säuregemisches mit dem Erz innerhalb einer gewissen Zeitspanne folgen zu lassen.

Es ist ferner bekannt, daß es beim Aufschluß von Schlacke mit Oleum und aus diesem Prozeß zurückgeführter vorkonzentrierter Dünnsäure zu einer unerwünscht starken Anreicherung der überwiegend aus den verwendeten Schlacken stammenden Schwermetallspuren, wie Chrom und Vanadin, kommt. Diese verbleiben bei der nachfolgenden Hydrolyse partiell bei dem erhaltenen Titandioxid-Hydrolysat und führen nach der Kalzination zu unerwünschten Farbtonbeeinflussungen der Pigmente.

Überraschenderweise konnte nun festgestellt werden, daß diese Anreicherung der überwiegend aus den Schlacken stammenden Schwermetallspuren beim gemeinsamen Aufschluß der erfindungsgemäß zusammengesetzten ternären Reaktionsmischungen mit Oleum und aus diesem Prozeß zurückgeführter vorkonzentrierter Dünnsäure in der aus dem Aufschlußgut nach Lösen in einem wäßrigen Lösungsmittel und Klärung erhaltenen hydrolysierbaren Titanylsulfatlösung dann unterbleibt oder so weit unterdrückt wird, daß keine schädlichen Wirkungen mehr an den daraus erhaltenen Pigmenten feststellbar sind, wenn aus diesem Prozeß rückgeführte vorkonzentrierte Dünnsäure zum Einsatz kommt, die auf eine $H_2SO_4$-Konzentration von 60 bis 75%, vorzugsweise von 63 bis 71%, vorkonzentriert wurde. Dabei reicht die beim Verschnitt dieser Dünnsäure mit Oleum erhaltene Verdünnungswärme aus, um ohne weitere Energiezufuhr die Aufschlußreaktion des Säuregemisches mit den erfindungsgemäßen ternären Reaktionsmischungen ablaufen zu lassen.

Die vorliegende Erfindung betrifft ein Verfahren zur Herstellung einer hydrolysierbaren

2

Titanylsulfatlösung durch den gemeinsamen Aufschluß von Schlacke-'lmenit-Gemischen mit Schwefelsäure und Lösen der verfestigten Reaktionsmasse in einem wäßrigen Lösungsmittel, wobei eine feinteilige Schlacke, die einen Ti-Gehalt >80% und einen Ti(III)-Gehalt von 22 bis 40%, vorzugsweise von 25 bis 35%, eine feinteilige Schlacke, die einen $TiO_2$-Gehalt von 60—80% und einen Ti(III)-Gehalt von 5—15% (berechnet als $TiO_2$ und bezogen auf Schlacke) und ein feinteiliger Ilmenit, der ein Fe(III)- zu Fe(II)-Verhältnis von 1 : 1 bis 10 : 1 aufweist, so zu einer ternären Rohstoffmischung zusammengeführt werden, daß in dieser Mischung das Molverhältnis von Ti(III) zu Fe-(III) $\geq$ 1,4, vorzugsweise das Gewichtsverhältnis von $FeSO_4$ zu $TiO_2$ $\leq$ 0,5 beträgt, die ternäre Rohstoffmischung zur Einstellung des Gewichtsverhältnisses $H_2SO_4$ zu $TiO_2$ von 1,7 : 1 bis 2,2 : 1 mit Schwefelsäure einer $H_2SO_4$-Konzentration größer 96% versetzt und die Aufschlußreaktion durch Zugabe von so viel Wasser, verdünnter Schwefelsäure oder Wasserdampf gestartet wird, daß die $H_2SO_4$-Konzentration danach bei 86—96% liegt.

Eine weitere Ausführungsform des erfindungsgemäßen Verfahrens besteht darin, daß zumindest eine der genannten feinteiligen Rohstoffkomponenten zunächst mit Oleum bzw. vorkonzentrierter Dünnsäure gemischt und danach mit der zur Herstellung der genannten ternären Rohstoffmischung noch benötigten Menge der feinteiligen Rohstoffkomponente(n) in vorkonzentrierter Dünnsäure bzw. Oleum versetzt wird. Eine bevorzugte Ausführungsform des erfindungsgemäßen Verfahrens besteht darin, daß die ternäre Rohstoffmischung gemeinsam aufgemahlen, mit Oleum bzw. vorkonzentrierter Dünnsäure versetzt und die Aufschlußreaktion mit vorkonzentrierter Dünnsäure bzw. Oleum gestartet wird. In einer weiteren bevorzugten Ausführungsform des Verfahrens kommen Oleum eines $SO_3$-Gehaltes bis 30% und rückgeführte, vorkonzentrierte Dünnsäure der $H_2SO_4$-Konzentration von 60 bis 75%, vorzugsweise von 63—71%, zum Einsatz.

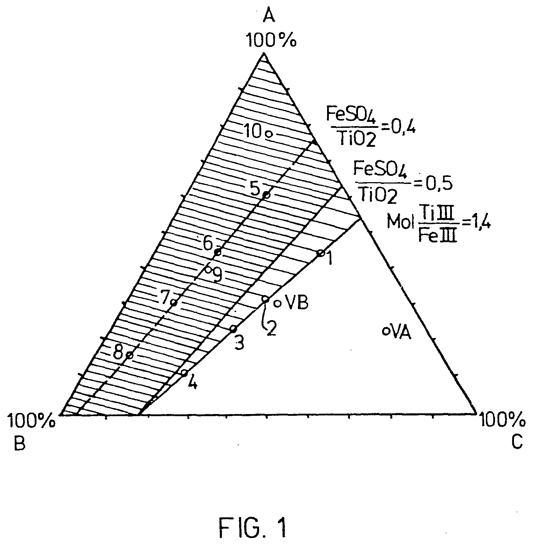

Alle angegebenen erfindungsgemäßen Verfahrensvarianten erlauben die Durchführung des Aufschlusses der genannten ternären Rohstoffmischungen mit Schwefelsäure oder einem Gemisch aus Oleum und rückgeführter vorkonzentrierter Dünnsäure sowohl nach einer diskontinuierlichen als auch nach einer kontinuierlichen Arbeitsweise. Dabei werden erfindungsgemäß wegen der größeren Betriebssicherheit vorzugsweise die genannten ternären Rohstoffmischungen, die durch ein Molverhältnis Ti(III) zu Fe(III) $\geq$ 1,4 und ein Gewichtsverhältnis $FeSO_4$ zu $TiO_2 \leq$ 0,5 charakterisiert sind, bei diskontinuierlicher Arbeitsweise eingesetzt. Bei kontinuierlicher Arbeitsweise können alle ternären Rohstoffmischungen mit einem Ti(III)- zu Fe(III)-Verhältnis $\geq$ 1,4 verwendet werden (vgl. Abb. 1).

Das erfindungsgemäße Verfahren arbeitet nicht nur besonders wirtschaftlich, sondern bietet darüber hinaus sowohl gegenüber der Herstellung einer hydrolysierbaren Titanylsulfatlösung aus jeweils nur einem der Rohstoffe als auch gegenüber dem getrennten Aufschluß der einzelnen Rohstoffkomponenten und der späteren Vereinigung der Lösungen bedeutende verfahrenstechnische Vorteile.

Beim alleinigen Schwefelsäureaufschluß ₒvon Schlacken bewirkt ein hoher Ti(III)-Gehalt als Reduktionsmittel auf die Schwefelsäure. Damit geht ein Teil der Schwefelsäure als Schwefeldioxid oder als Schwefelwasserstoff verloren und muß aus der Abluft entfernt werden. Darüber hinaus kann die resultierende Aufschlußlösung beträchtliche Mengen Ti(III) enthalten. Damit ist sie für die nachfolgende Hydrolyse nur schlecht geeignet, da das in der Lösung vorhandene Ti(III) erst oxidiert werden muß, um mit hoher Ausbeute hydrolysiert werden zu können. Andererseits führt der alleinige Aufschluß von $Fe_2O_3$-haltigen Ilmeniten mit Schwefelsäure zu Lösungen, die vor der Hydrolyse erst mit einer großen Menge Eisenschrott versetzt werden müssen, um die vorhandenen Fe(III)- zu Fe(II)-Ionen zu reduzieren.

Dabei wird zusätzlich Schwefelsäure verbraucht und der Gesamteisengehalt der Lösungen so weit ansteigen, daß sie nicht direkt zur Hydrolyse einsetzbar sind. Sie müssen vielmehr erst gekühlt werden, um das Eisen in Form von z. B. $FeSO_4 \cdot 7 H_2O$ abzuscheiden. Demgegenüber reagiert nach dem erfindungsgemäßen Verfahren das Ti(III) der Schlacken bevorzugt mit dem Fe(III) des Ilmenits, so daß auf eine zusätzliche Fe(III)-Reduktion, eine zusätzliche Ti(III)-Oxidation und eine Eisenabtrennung verzichtet werden kann, sowie ein zusätzlicher Schwefelsäureverbrauch entfällt.

Weiterhin bietet das erfindungsgemäße Verfahren gegenüber dem getrennten Aufschluß $TiO_2$- und Ti(III)-haltiger Schlacken und eines Ilmenits in einem solchen Verhältnis, daß alles Eisen der Ilmenitlösung durch das noch vorhandene Ti(III) der Schlackenlösungen zu Fe(II) reduziert wird, den Vorteil, daß stets gleichbleibende Ilmenitanteile verarbeitet werden können.

Schließlich arbeitet der erfindungsgemäße Prozeß umweltfreundlich, da er eine sinnvolle Rückführung der aus ihm erhaltenen vorkonzentrierten Dünnsäure in einem einfachen Arbeitsschritt erlaubt. Dies ist insbesondere hinsichtlich der Mitverarbeitung beträchtlicher Ilmenitanteile bedeutungsvoll.

Das erfindungsgemäße Verfahren gestattet es, in einem besonders wirtschaftlichen, technisch einfach auszuführenden Arbeitsschritt die Verarbeitung dreier gängiger Rohstoffe unter Rückführung erheblicher Teile vorkonzentrierter Dünnsäure ohne Verluste der Aufschlußausbeute durchzuführen, ohne daß es zu einer nachteiligen Anreicherung der überwiegend aus den verwendeten Schlacken stammenden Schwermetallspuren, wie Chrom oder Vanadin, in der Aufschlußlösung kommt. Man erhält somit nach dem Lösen der Reaktionsmasse in einem wäßrigen Lösungsmittel und einem

3

Klärungsschritt eine unmittelbar zur Verarbeitung auf Titandioxidpigmente geeignete, hydrolysierbare Titanylsulfatlösung, ohne zusätzlichen Reduktionsschritt zur Minderung des in dem Ilmenit vorhandenen Fe(III)-Gehaltes und ohne zusätzlichen Oxydationsschritt zur Minderung des in den Schlacken vorhandenen Ti(III)-Gehaltes. Weiterhin werden Schwefelsäureverluste, die durch die Reaktion des Ti(III) mit der Schwefelsäure sowie durch die Reaktion mit Eisenschrott zur Reduktion des im Ilmenit enthaltenen Fe(III)-Gehaltes entstehen, vermieden. Schließlich wird das Reduktionspotential der Schlacken vollständiger zur Umsetzung mit dem Fe(III)-Gehalt des Ilmenits genutzt, so daß Titanylsulfatlösungen erhalten werden, deren Gesamteisengehalt so niedrig liegt, daß auf eine Abscheidung von z. B. $FeSO_4 \cdot 7 H_2O$ verzichtet werden kann.

Nachfolgend wird das erfindungsgemäße Verfahren beispielhaft erläutert. Sofern nichts anderes angegeben wird, werden alle Angaben in Gew.-% gemacht.

Einer Zeichnung Fig. 1 sind die Mischungen der Beispiele und Vergleichsbeispiele zu entnehmen. Das Gebiet der beanspruchten Mischungen ist schraffiert, das der bevorzugten Mischungen eng schraffiert.

Beispiel 1—4

In einem mit einem Thermometer und einem Rührer versehenen und zur Kompensation der Wärmeabstrahlung in einem der Innentemperatur des Aufschlußgefäßes nachführbaren Luftbad befindlichen 500 ml Glasgefäß wurde entsprechend der nachfolgenden Tabelle 1 96%ige Schwefelsäure vorgelegt und eine ternäre Rohstoffmischung, bestehend aus auf eine Korngröße von 87,9% <40 µ aufgemahlener Schlacke A, die einen $TiO_2$-Gehalt von 87%, einen Ti(III)-Gehalt von 30% (berechnet als $TiO_2$ und bezogen auf Schlacke) und einen Fe-Gehalt von 7,7% besaß, auf eine Korngröße von 78,4% <40 µ aufgemahlener Schlacke B, die einen $TiO_2$-Gehalt von 70,8%, einen Ti(III)-Gehalt von 7,9% (berechnet als $TiO_2$ und bezogen auf Schlacke) und einen Fe-Gehalt von 9,9% besaß, sowie auf eine Korngröße von 93,7% < 40 µ aufgemahlenem Ilmenit, der einen $TiO_2$-Gehalt von 60,2%, einen Fe-Gehalt von 25% und ein Fe(III)- zu Fe(II)-Verhältnis von 2,29 : 1 besaß, eingetragen und unter intensivem Rühren bei 40°C mit Wasser zum Starten der Aufschlußreaktion versetzt. In der Mischung lagen somit 100 g $TiO_2$ vor, betrug das Molverhältnis von Ti(III) zu Fe(III) 1,4 : 1, das Verhältnis $FeSO_4$ zu $TiO_2$ die aus der Tabelle 1 erreichten Werte, das Verhältnis $H_2SO_4$ zu $TiO_2$ 2,0 : 1 und die $H_2SO_4$-Endkonzentration 91%.

Nach Beendigung der Wasserzugabe wurden in den nach Tabelle 1 angegebenen Zeiten bei exothermer Reaktion die maximalen Reaktionstemperaturen erreicht. Danach wurde die verfestigte Reaktionsmasse 5 Stunden gealtert, wobei die Temperatur auf 180°C abfiel und schließlich durch Zugabe von 300 ml Wasser in 4 Stunden bei 70°C gelöst. Als $TiO_2$-Ausbeute wird in der Tabelle 1 der prozentual in Lösung befindliche gegen den insgesamt eingesetzten $TiO_2$-Anteil angegeben.

Bei den Beispielen 1—4 wurde stets beobachtet, daß die Reaktionsmischung bis zur Verfestigung nahezu die doppelte Zeit benötigte wie bis zum Erreichen der maximalen Reaktionstemperatur.

Somit sind die gemäß der Beispiele 1—4 durchgeführten Aufschlüsse für eine diskontinuierliche Durchführung weniger gut geeignet, da bei der maximalen Reaktionstemperatur noch eine zähflüssige Aufschlußmasse enthalten ist, die wenig zur Ausbildung einer Porenstruktur neigt. Dadurch kann das Austreten von Wasserdampf und das spätere Auflösen der Reaktionsmischung erschwert werden.

Zur diskontinuierlichen Durchführung ist ein zeitliches Zusammentreffen der maximalen Reaktionstemperatur mit dem Festwerden des Aufschlußkuchens auf Grund der obengemachten Darlegungen wünschenswert.

Tabelle 1

Aufschlußdaten der Beispiele 1—4

| Bei-spiel | $H_2SO_4$ 96% | Schlacke A | Schlacke B | Ilmenit | Startwasser | Verhältnis | Reaktions-zeit | Zeit b. Kuchen-Verfesti-gung | Max. Reak-tionstemp. | $TiO_2$-Aus-beute | Ti(III) |
|---|---|---|---|---|---|---|---|---|---|---|---|
| | [g] | [g] | [g] | [g] | [g] | $\dfrac{FeSO_4}{TiO_2}$ | [min] | [min] | [°C] | [%] | [% vom gelösten $TiO_2$] |
| 1 | 246,5 | 59,8 | 20,4 | 55,7 | 13,5 | 0,56 | 22 | 41 | 209 | 94,6 | 1,8 |
| 2 | 245,6 | 44,0 | 45,6 | 48,4 | 13,5 | 0,55 | 25 | 41 | 206 | 94,3 | 1,4 |
| 3 | 244,6 | 30,9 | 67,4 | 42,1 | 13,4 | 0,53 | 24 | 39 | 207 | 92,5 | 1,5 |
| 4 | 243,7 | 15,7 | 72,9 | 34,3 | 13,4 | 0,52 | 24 | 41 | 206 | 93,2 | 0,8 |

## Beispiele 5—8

In der in den Beispielen 1—4 beschriebenen Apparatur wurden 94,2 g auf 66,8% $H_2SO_4$ aufkonzentrierte, rückgeführte Dünnsäure vorgelegt, eine ternäre Rohstoffmischung, bestehend aus den in den Beispielen 1—4 beschriebenen Rohstoffeinzelkomponenten in den in Tabelle 2 angegebenen Mengen eingetragen und unter intensivem Rühren bei 40°C zum Starten der Aufschlußreaktion 153,9 g Oleum mit einem $SO_3$-Gehalt von 25,8% zugesetzt. In der Mischung lagen somit 100 g $TiO_2$ vor, erreichte das Molverhältnis von Ti(III) zu Fe(III) die in Tabelle 2 angegebenen Werte, betrug das Gewichtsverhältnis von $FeSO_4$ zu $TiO_2 = 0,4$, das Gewichtsverhältnis von $H_2SO_4$ zu $TiO_2$ 2,0 : 1 und die $H_2SO_4$-Endkonzentration 91%. Nach der Beendigung der Oleumzugabe wurden in den nach Tabelle 2 angegebenen Zeiten bei exothermer Reaktion die maximalen Reaktionstemperaturen erreicht. Danach wurde die verfestigte Reaktionsmasse wie in den Beispielen 1—4 gealtert und gelöst. Die $TiO_2$-Ausbeute (% $TiO_2$ gelöst im Verhältnis zum eingesetzten $TiO_2$) kann der Tabelle 2 entnommen werden.

Alle Aufschlüsse verfestigen sich nahezu gleichzeitig mit Erreichen der maximalen Reaktionstemperatur und sind daher für diskontinuierliche Arbeitsweise gut geeignet.

Der relativ hohe Ti(III)-Gehalt der resultierenden Lösungen ist verfahrensbedingt, da bei den Laboraufschlüssen auf Lufteinblasung zur Rührung verzichtet wurde. Bei Nachstellung betriebsentsprechender Verfahrensweisen werden die verbleibenden Ti(III)-Gehalte durch Luft oxydiert.

Dies wird durch die Ausführungsform des folgenden Beispiels verdeutlicht, bei dem das mechanische Rühren durch ein Durchblasen von Luft ersetzt wird.

Tabelle 2

Aufschlußdaten der Beispiele 5—8

| Beispiel | Schlacke A [g] | Schlacke B [g] | Ilmenit [g] | Verhältnis Mol $\frac{Ti(III)}{Fe(III)}$ | Reaktionszeit [min] | Zeit b. Kuchen-Verfestigung [min] | Max. Reaktionstemp. [°C] | TiO$_2$-Ausbeute [%] | Ti(III) [% vom gelösten TiO$_2$] |
|---|---|---|---|---|---|---|---|---|---|
| 5 | 77,1 | 24,8 | 25,5 | 3,93 | 14 | 20 | 204 | 94,4 | 12,5 |
| 6 | 59,5 | 50,3 | 20,9 | 4,06 | 17 | 19 | 205 | 94,6 | 8,3 |
| 7 | 40,3 | 78,0 | 16,1 | 4,17 | 16 | 17 | 206 | 94,5 | 7,9 |
| 8 | 21,4 | 106,2 | 10,3 | 4,86 | 16 | 17 | 207 | 95,3 | 6,3 |

## Beispiel 9

In diesem Beispiel werden betriebsentsprechende Verfahrensweisen beim erfindungsgemäßen Schwefelsäureaufschluß der Rohstoffmischungen im Labormaßstab durchgeführt. In einem mit einem Thermometer und einem Tauchrohr zur Einleitung von Luft versehenen und zur Kompensation der Wärmeabstrahlung in einem der Innentemperatur des Aufschlußgefäßes nachführbaren Luftbad befindlichen 1600-ml-Glasgefäß mit kegelförmigem Boden wurden 337 g rückgeführte, auf einen $H_2SO_4$-Gehalt von 65,1% aufkonzentrierte Dünnsäure vorgelegt und 500 g einer ternären Rohstoffmischung, bestehend aus den in den Beispielen 1—4 hinsichtlich der chemischen Zusammensetzung und der Korngröße charakterisierten Einzelkomponenten in einer Menge von 200 g Schlacke A, 225 g Schlacke B und 75 g Ilmenit eingetragen und unter Durchleiten von 500 l Luft/Stunde bei Raumtemperatur über 15 Minuten mit 572 g Oleum einer $SO_3$-Konzentration von 21% zum Starten der Aufschlußreaktion versetzt. In der Mischung lagen 378,5 g $TiO_2$ vor, betrug das Molverhältnis von Ti(III) zu Fe(III) 4,19 : 1, das Gewichtsverhältnis von $FeSO_4$ zu $TiO_2$ 0,42 : 1, das Gewichtsverhältnis von $H_2SO_4$ zu $TiO_2$ 1,9 : 1 und die $H_2SO_4$-Endkonzentration 90%.

Nach Beginn der Oleumzugabe wurde in 46 Minuten bei exothermer Reaktion die maximale Reaktionstemperatur von 206°C erreicht. Die Reaktionsmasse verfestigte sich 37 Minuten nach Beginn der Oleumzugabe. Nach Erreichen der maximalen Reaktionstemperatur wurde die verfestigte Reaktionsmasse 5 Stunden bei 180°C in einem Trockenschrank gealtert und anschließend durch Zugabe von 1200 ml Wasser in 4 Stunden bei 70°C unter Durchleiten von 100 l Luft pro Stunde gelöst.

Es befanden sich 92,8% des eingesetzten $TiO_2$ in der Lösung und 0,9% des gelösten $TiO_2$ lagen als Ti(III) vor.

## Beispiel 10

Gemäß der Anmeldung wurde in der in den Beispielen 1—4 beschriebenen Aufschlußapparatur 94,3 g rückgeführte, auf eine $H_2SO_4$-Konzentration von 65% aufkonzentrierte Dünnsäure vorgelegt und 122,0 einer ternären Rohstoffmischung, bestehend aus den in den Beispielen 1—4 hinsichtlich ihrer chemischen Zusammensetzung und der Korngröße charakterisierten Einzelkomponenten in einer Menge von 94,5 g Schlacke A, 12,2 g Schlacke B und 15,3 g Ilmenit eingetragen und unter Rühren bei 40°C 152,0 g mit Oleum der $SO_3$-Konzentration von 24,5% zum Starten der Ausschlußreaktion versetzt. In der Mischung lagen 100 g $TiO_2$ vor, betrug das Molverhältnis von Ti(III) zu Fe(III) 7,59, das Gewichtsverhältnis von $FeSO_4$ zu $TiO_2$ 0,33, das Gewichtsverhältnis von $H_2SO_4$ zu $TiO_2$ 2,0 und die $H_2SO_4$-Endkonzentration 90%. Nach dem Oleumzusatz wurde in 13 Minuten bei exothermer Reaktion die maximale Reaktionstemperatur von 206°C erreicht. Die Reaktionsmasse verfestigte sich 16 Minuten nach der Oleumzugabe. Nach Erreichen der maximalen Reaktionstemperatur wurde die verfestigte Reaktionsmasse 5 Stunden bei 180°C in einem Trockenschrank gealtert und anschließend durch Zugabe von 300 ml Wasser in 4 Stunden bei 7=°C gelöst. Es befanden sich 94,3% des eingesetzten $TiO_2$ in Lösung und 15,6% des gelösten $TiO_2$ lagen als Ti(III) vor.

## Vergleichsbeispiel VA

In einem Vergleichsbeispiel wurden in der in Beispiel 9 beschriebenen Apparatur 845 g Schwefelsäure der Konzentration von 96% $H_2SO_4$ vorgelegt und 500 g einer ternären Rohstoffmischung, bestehend aus den in den Beispielen 1—4 hinsichtlich der chemischen Zusammensetzung und der Korngröße charakterisierten Einzelkomponenten in einer Menge von 110 g Schlacke A, 50 g Schlacke B und 340 g Ilmenit eingetragen und unter Durchleiten von 500 l Luft/Stunde bei Raumtemperatur über 12 Minuten mit 76,8 g Wasser zum Starten der Aufschlußreaktion versetzt. In der Mischung lagen 335,8 g $TiO_2$ vor, betrug das Molverhältnis von Ti(III) zu Fe(III) 0,44, das Gewichtsverhältnis von $FeSO_4$ zu $TiO_2$ 0,8, das Gewichtsverhältnis von $H_2SO_4$ zu $TiO_2$ 1,9 und die $H_2SO_4$-Endkonzentration 88%. Nach Beginn der Wasserzugabe wurde in 50 Minuten bei exothermer Reaktion die maximale Reaktionstemperatur von 195°C erreicht. Die Reaktionsmasse verfestigte sich 43 Minuten nach Beginn der Wasserzugabe. Nach Erreichen der maximalen Reaktionstemperatur wurde die verfestigte Reaktionsmasse 3 Stunden bei 180°C in einem Trockenschrank gealtert und anschließend durch Zugabe von 1200 ml Wasser, 30,7 g 96%iger Schwefelsäure und 20,0 g Fe-Schrott zur Reduktion des überschüssigen Fe(III)-Gehaltes in 8 Stunden bei 70°C unter Durchleiten von 100 l Luft pro Stunde gelöst. Es befanden sich 90,3% des eingesetzten $TiO_2$ in der Lösung und 1,1% des gelösten $TiO_2$ lagen als Ti(III) vor.

Dieses Vergleichsbeispiel VA, welches eine Rohstoffmischung weit außerhalb des beanspruchten Mischungsbereiches liegt (vgl. Fig. 1), demonstriert, daß selbst bei einer Zugabe von Fe-Schrott keine Aufschlußausbeuten im erfindungsgemäßen Ausbeutebereich für gelöstes $TiO_2$ erreicht werden.

Vergleichsbeispiel VB

In einem weiteren Vergleichsbeispiel wurde in der in den Beispielen 1—4 beschriebenen Aufschlußapparatur 247 g Schwefelsäure der $H_2SO_4$-Konzentration von 96% vorgelegt und 139,9 g einer ternären Rohstoffmischung, bestehend aus den in den Beispielen 1—4 hinsichtlich der chemischen Zusammensetzung und der Korngröße charakterisierten Einzelkomponenten in einer Menge von 42,0 g Schlacke A, 43,3 g Schlacke B und 54,6 g Ilmenit eingetragen und unter Rühren bei 40° C mit 13,6 g Wasser zum Starten der Aufschlußreaktion versetzt. In der Mischung lagen 100 g $TiO_2$ vor, betrug das Molverhältnis von Ti(III) zu Fe(III) 1,2, das Gewichtsverhältnis von $FeSO_4$ zu $TiO_2$ 0,57, das Gewichtsverhältnis von $H_2SO_4$ zu $TiO_2$ 2,0 und die $H_2SO_4$-Endkonzentration 91%. Nach dem Wasserzusatz wurde in 21 Minuten bei exothermer Reaktion die maximale Reaktionstemperatur von 208° C erreicht. Die Reaktionsmasse verfestigte sich 47 Minuten nach der Wasserzugabe. Nach Erreichen der maximalen Reaktionstemperatur wurde die verfestigte Reaktionsmasse 5 Stunden bei 180° C in einem Trockenschrank gealtert und anschließend durch Zugabe von 300 ml Wasser und 0,8 g Eisenschrott in 4 Stunden bei 70° C gelöst. Es befanden sich 77,0% des eingesetzten $TiO_2$ in der Lösung und Spuren des gelösten $TiO_2$ lagen als Ti(III) vor.

An den Vergleichsbeispielen VA und VB erkennt man, daß tertnäre Mischaufschlüsse außerhalb des in dieser Anmeldung beanspruchten Bereichs (vgl. Abb. 1) zum Einstellen eines erwünschten geringen Ti(III)-Pegels in der Lösung erhebliche Schrottzusätze verlangen. Selbst unter diesen Bedingungen treten auch bei deutlich verlängerten Lösezeiten (geringe Raum-Zeit-Ausbeute) nicht voll befriedigende Aufschlußausbeuten (Vergleichsbeispiele VA) bzw. bei deutlich zu geringem Schrottzusatz sogar erhebliche Ausbeuteverluste (Vergleichsbeispiel VB) auf.

## Patentansprüche

1. Verfahren zur Herstellung einer hydrolysierbaren Titanylsulfatlösung durch den gemeinsamen Aufschluß von Schlacke-Ilmenit-Gemischen mit Schwefelsäure und Lösen der verfestigten Reaktionsmasse in einem wäßrigen Lösungsmittel, dadurch gekennzeichnet, daß eine feinteilige Schlacke, die einen Ti-Gehalt > 80% und einen Ti(III)-Gehalt von 22—40%, vorzugsweise von 25—35%, eine feinteilige Schlacke, die einen Ti-Gehalt von 60—80% und einen Ti(III)-Gehalt von 5—15% (berechnet als $TiO_2$ und bezogen auf Schlacke) und ein feinteiliger Ilmenit, der ein Fe(III) zu Fe(II)-Verhältnis von 1 : 1 bis 10 : 1 aufweist, so zu einer ternären Rohstoffmischung zusammengefügt werden, daß in dieser Mischung das Molverhältnis von Ti(III) zu Fe(III) $\geq 1,4$, die ternäre Rohstoffmischung zur Einstellung des Gewichtsverhältnisses $H_2SO_4$ zu $TiO_2$ von 1,7 : 1 bis 2,2 : 1 mit Schwefelsäure einer $H_2SO_4$-Konzentration von größer 96% versetzt und die Aufschlußreaktion durch Zugabe von so viel Wasser verdünnter Schwefelsäure oder Wasserdampf gestartet wird, daß die $H_2SO_4$-Konzentration danach bei 86—96% liegt.

2. Verfahren gemäß Anspruch 1, dadurch gekennzeichnet, daß das Gewichtsverhältnis $FeSO_4$ zu $TiO_2 \leq 0,5$, vorzugsweise $\leq 0,4$ beträgt.

3. Verfahren gemäß einem der Ansprüche 1 oder 2, dadurch gekennzeichnet, daß zumindest eine der beschriebenen feinteiligen Rohstoffkomponenten zunächst mit Oleum bzw. vorkonzentrierter Dünnsäure gemischt und danach mit der zur Herstellung der beschriebenen ternären Rohstoffmischung noch benötigten Menge der feinteiligen Rohstoffkomponente(n) in vorkonzentrierter Dünnsäure bzw. Oleum versetzt wird.

4. Verfahren gemäß einem der Ansprüche 1 bis 2, dadurch gekennzeichnet, daß die ternäre Rohstoffmischung gemeinsam aufgemahlen, mit Oleum bzw. vorkonzentrierter Dünnsäure versetzt und die Aufschlußreaktion mit vorkonzentrierter Dünnsäure bzw. Oleum gestartet wird.

5. Verfahren nach einem der Ansprüche 3 oder 4, dadurch gekennzeichnet, daß Oleum eines $SO_3$-Gehaltes bis 30% und rückgeführte vorkonzentrierte Dünnsäure der $H_2SO_4$-Konzentration von 60—75%, vorzugsweise von 63—71%, zum Einsatz kommen.

## Claims

1. Process for the preparation of a hydrolysable titanyl sulphate solution by simultaneous extraction of mixtures of slag and ilmenite with sulphuric acid and dissolving the solidified reaction mass in an aqueous solvent, characterised in that a finely divided slag having a Ti content of > 80% and a Ti(III) content of 22—40%, preferably 25—35%, a finely divided slag having a Ti content of 60—80% and a Ti(III) content of 5—15% (calculated as $TiO_2$ and based on the slag) and a finely divided ilmenite in which the proportion of Fe(III) to Fe(II) is from 1 : 1 to 10 : 1 are added together in such proportions that the ternary mixture of raw materials obtained has a molar ratio of Ti(III) to Fe(III) $\geq 1.4$, sulphuric acid having an $H_2SO_4$ concentration greater than 96% is added to the ternary mixture of raw materials to adjust the proportion by weight of $H_2SO_4$ to $TiO_2$ to 1.7 : 1 to 2.2 : 1, and the reaction of extraction is then started by the addition of the quantity of water, dilute sulphuric acid or steam required to adjust

the $H_2SO_4$ concentration to $86-96\%$.

2. Process according to claim 1, characterised in that the proportion by weight of $FeSO_4$ to $TiO_2 \leqq 0.5$, preferably $\leqq 0.4$.

3. Process according to one of the claims 1 or 2, characterised in that at least one of the finely divided raw material components described is first mixed with oleum or preconcentrated dilute acid, and the quantity of finely divided raw material component(s) still required for preparing the ternary raw material mixture described is then added in preconcentrated dilute acid or oleum.

4. Process according to one of the claims 1 to 2, characterised in that the whole ternary mixture of raw materials is ground up together, oleum or preconcentrated dilute acid is added and the reaction for extraction is started with preconcentrated dilute acid or oleum.

5. Process according to one of the claims 3 or 4, characterised in that oleum having an $SO_3$ content of up to $30\%$ and returned preconcentrated dilute acid having an $H_2SO_4$ concentration of $60-75\%$, preferably $63-71\%$, are used.

**Revendications**

1. Procédé pour la production d'une solution hydrolysable de sulfate de titanyle par l'attaque simultanée de mélanges scorie-ilménite par l'acide sulfurique et dissolution de la masse de réaction solidifiée dans un solvant aqueux, caractérisé en ce que l'on réunit en un mélange ternaire de matières premières une scorie en fines particules ayant une teneur en Ti > 80% et une teneur en Ti(III) de $22-40\%$, de préférence de $25-35\%$, une scorie en fines particules ayant une teneur en Ti de $60-80\%$ et une teneur en Ti(III) de $5-15\%$ (exprimée en $TiO_2$ et rapportée à la scorie) et une ilménite en fines particules qui présente un rapport de Fe(III) à Fe(II) de 1 : 1 à 10 : 1, de telle manière que ce mélange présente un rapport molaire de Ti(III) à Fe(III) $\geqq 1,4$, on ajoute au mélange ternaire de matières premières de l'acide sulfurique à une concentration en $H_2SO_4$ de plus de 96% pour le réglage du rapport pondéral de $H_2SO_4$ à $TiO_2$ de 1,7 : 1 à 2,2 : 1 et on démarre la réaction d'attaque par addition d'une quantité d'acide sulfurique dilué dans l'eau ou de vapeur d'eau, telle que la concentration de $H_2SO_4$ soit ensuite comprise entre 86 et 96%.

2. Procédé selon la revendication 1, caractérisé en ce que le rapport pondéral de $FeSO_4$ à $TiO_2$ est $\leqq 0,5$, de préférence $\leqq 0,4$.

3. Procédé selon l'une des revendication 1 ou 2, caractérisé en ce que l'on mélange d'abord l'un au moins des composants de départ en fines particules décrits avec l'oléum ou l'acide dilué préalablement concentré et on ajoute ensuite la quantité du ou des composants de départ en fines particules dans l'acide dilué préconcentré ou dans l'oléum encore nécessaire pour la préparation du mélange ternaire de matières premières décrit.

4. Procédé selon l'une des revendications 1 à 2, caractérisé en ce que l'on broie ensemble le mélange ternaire de matières premières, on ajoute de l'oléum ou de l'acide dilué préconcentré et on démarre la réaction d'attaque par l'acide dilué préconcentré ou par l'oléum.

5. Procédé selon l'une des revendications 3 ou 4, caractérisé en ce que l'on utilise de l'oléum ayant une teneur en $SO_3$ allant jusqu'à 30% et de l'acide dilué préconcentré recyclé d'une concentration en $H_2SO_4$ de $60-75\%$, de préférence de $63-71\%$.

FIG. 1